# EUROPÄISCHE PATENTSCHRIFT

(11) **EP 3 320 305 B1**
(45) Veröffentlichungstag und Bekanntmachung des Hinweises auf die Patenterteilung: **25.12.2019**
(21) Anmeldenummer: 16734574.3
(22) Anmeldetag: 15.06.2016
(51) Int. Cl.: G01D 5/14, G01D 11/24

(54) **SENSORANORDNUNG MIT MODULAREM AUFBAU**
SENSOR ARRANGEMENT WITH MODULAR CONSTRUCTION
DISPOSITIF DE DÉTECTION AVEC CONSTRUCTION MODULAIRE

(30) Priorität: 07.07.2015 DE 102015212633
(43) Veröffentlichungstag der Anmeldung: 16.05.2018
(73) Patentinhaber: Continental Teves AG & Co. OHG, 60488 Frankfurt am Main (DE)
(72) Erfinder: HAVERKAMP, Martin, 60385 Frankfurt (DE); GOLL, Manfred, 63695 Glauburg (DE); ACKER, Heinrich, 65824 Schwalbach (DE); ANTONI, Henrik, 63579 Freigericht (DE); HABIG, Jens, 61476 Kronberg (DE); SCHULMEISTER, Michael, 64846 Gross-Zimmern (DE); SCHRÖDER, Philipp, 65719 Hofheim (DE)
(86) Internationale Anmeldenummer: PCT/EP2016/063713
(87) Internationale Veröffentlichungsnummer: WO 2017/005468

(56) Entgegenhaltungen:
- EP-A1- 2 644 921
- EP-A2- 0 943 469
- EP-A2- 1 376 077
- DE-C1- 19 733 719
- US-A1- 2014 047 913

## Beschreibung

Die Erfindung betrifft eine Sensoranordnung nach dem Oberbegriff der unabhängigen Ansprüche.

Das Dokument DE 197 33 719 C1 offenbart einen Fahrzeugniveaugeber mit einem Gehäuse und mit zwei beweglich zueinander angeordneten, miteinander über ein Kugelgelenk verbundenen Bauteilen.

Das Dokument EP 2 644 921 A1 offenbart eine Lageranordnung mit einem exzentrisch angeordneten Messaufnehmer und Messgeber.

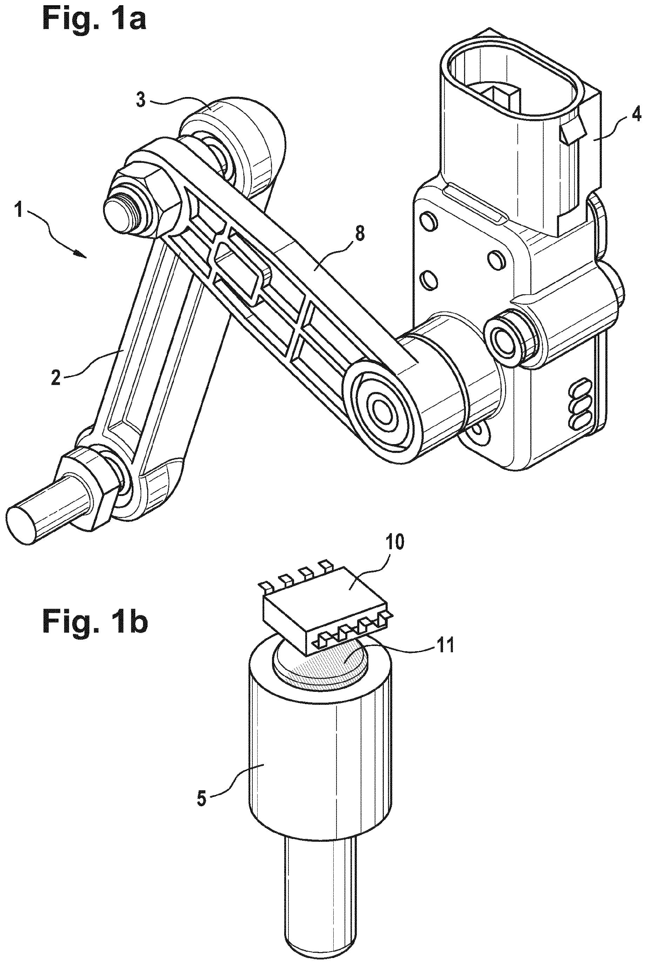

Fig. 1a zeigt eine aus dem Stand der Technik bekannte Sensoranordnung 1. Solche Sensoranordnungen kommen beispielsweise zum Einsatz, wenn die Verlagerung einer Komponente eines Fahrzeugs erfasst werden soll. Die Sensoranordnung 1 umfasst eine verlagerbare Koppelstange 2, welche beispielsweise mit einem Kraftfahrzeugfahrwerk koppelbar ist, um eine Verlagerung eines nicht dargestellten Kraftfahrzeugfahrwerks zu erfassen. Ebenso wäre es jedoch denkbar die verlagerbare Koppelstange 2 mit einer Karosserie, einem Scheinwerfer, einer Kraftfahrzeugachse oder einer anderen Fahrzeugkomponente zu koppeln. Des Weiteren umfasst die Sensoranordnung ein Koppelgelenk 3 und einen Bewegungsaufnehmer 8. Die Sensoranordnung umfasst weiterhin ein Gehäuse 4, ein Lagerelement in Form einer aus der Zeichnung nicht ersichtlichen Welle sowie einen Positionsgeber und einen Positionsnehmer, die derart zueinander angeordnet sind, dass die Bewegung des Bewegungsaufnehmers 8 messbar ist.

Die Koppelstange ist über das Koppelgelenk 3 mit dem Bewegungsaufnehmer 8 gekoppelt. Durch eine Verlagerung des Kraftfahrzeugfahrwerks wird die Koppelstange 2 bewegt und der gekoppelte Bewegungsaufnehmer 8 um einen Winkel gedreht, der durch die Sensoranordnung 1 erfasst wird. Dazu weist der Bewegungsaufnehmer 8 das Lagerelement in Form der in dem Gehäuse 4 als Gleitlager gelagerten Welle auf, die an ihrem freien Ende den Positionsgeber enthält und sich in Folge der Drehbewegung des Bewegungsaufnehmers 8 um die eigene Längsachse dreht. Koppelstange 2 und Bewegungsaufnehmer 8 sind länglich und formsteif ausgeführt um eine präzise Übertragung bzw. Übersetzung der zu erfassenden Verlagerung an eine zur Erfassung geeignete Stelle zu gewährleisten. Der Positionsgeber ist als magnetischer Encoder ausgebildet, der sich mit der Welle mitdreht. Der Winkel der Drehung des magnetischen Encoders wird durch den in das Gehäuse 4 integrierten Positionsnehmer in Form eines Hall-Sensors erfasst.

Fig. 1b zeigt die das Lagerelement 5 bildende Welle mit dem Positionsgeber 11 sowie den Positionsnehmer 10 der Sensoranordnung 1 aus Fig. 1a losgelöst von dem Gehäuse 4. Der Positionsgeber 11 ist dabei als magnetischer Encoder mit einer permanentmagnetischen Teilung in Form eines Polpaares ausgeführt und am Ende der Welle befestigt. Bei dem Positionsnehmer 10 handelt es sich um einen Hall-Sensor, der von Strom durchflossen wird und in Abhängigkeit der Richtung des Magnetfelds des magnetischen Encoders eine Hall-Spannung ausgibt, aus deren Auswertung sich der Drehwinkel des Positionsgebers 11 und damit der Welle ergibt.

Diese Sensoranordnung hat den Nachteil, dass die durch das Gehäuse geführte Welle nach außen abgedichtet sein muss, da Undichtigkeiten zum Eindringen von Feuchtigkeit führen und die Funktion der Sensoranordnung beeinträchtigen. Gleiches könnte auch durch den Verschleiß der Wellenlagerung verursacht werden. Darüber hinaus gestaltet sich die Montage eines magnetischen Geberelements an einer Stahlwelle aufgrund der unterschiedlichen Temperaturausdehnungskoeffizienten sehr aufwändig.

Ein weiterer Nachteil besteht darin, dass bei einer integrierten Anordnung des Nehmerelements innerhalb des Gehäuses der Austausch einzelner Komponenten der Winkelsensoranordnung nur zu hohen Kosten realisierbar ist.

Es ist daher Aufgabe der Erfindung, eine Sensoranordnung bereitzustellen, die bei hoher Genauigkeit robust arbeitet und dabei einfach und variabel herstellbar ist.

Die Aufgabe wird durch die Merkmale des Anspruchs 1 gelöst. Unter einem hervorstehend aus dem Gehäuse ausgebildeten Lagerelement wird bevorzugt verstanden, dass das Lagerelement gegenüber seiner Schnittstelle zum Gehäuse hervorstehend ausgebildet ist. Wird das Lagerelement an anderen Stellen oder Bereichen des Gehäuses von diesem überragt bzw. ist das Lagerelement innerhalb einer Vertiefung des Gehäuses ausgebildet, steht dies dem Erfindungsgedanken ausdrücklich nicht entgegen.

Die Erfindung basiert auf dem Grundgedanken die Lagerung des Bewegungsaufnehmers oder auch der Welle aus dem Inneren des Gehäuses nach außen zu verlagern. Die Lagerung wird auf diese Weise umgekehrt, d. h. das Lagerelement bildet ein statisches Element der Sensoranordnung, wohingegen das Gegenstück als Teil des Bewegungsaufnehmers beweglich ist. Dies hat neben der einfachen Montierbarkeit den Vorteil, dass die Lagerung sich nicht im Gehäuseinneren, sondern außerhalb des Gehäuses befindet, wodurch Maßnahmen zum Abdichten entfallen oder vereinfacht werden können. Für die Positionierung des Positionsgeber- und des Positionsnehmerelements ergeben sich darüber hinaus zusätzliche Möglichkeiten.

Bevorzugte Weiterbildungen sind Gegenstand der abhängigen Ansprüche, der Figuren und der Beschreibung, die durch ausdrückliche Bezugnahme zum Gegenstand der Beschreibung gemacht werden.

In einer vorteilhaften Ausführungsform ist der Positionsgeber oder der Positionsnehmer mit dem Lagerelement, dem Bewegungsaufnehmer, dem Gehäuse oder einem Gehäusemodul verbunden.

In einer vorteilhaften Ausführungsform ist das Lagerelement mit dem Gehäuse starr verbunden. Auf diese Weise lassen sich Art und Anzahl der Freiheitsgrade in besonders eindeutiger und einfacher Weise durch die Lagerung definieren.

In einer vorteilhaften Ausführungsform ist der Positionsnehmer oder der Positionsgeber in das Lagerelement oder das Gehäuse integriert.

In einer weiteren vorteilhaften Ausführungsform ist der Positionsnehmer oder der Positionsgeber in den Bewegungsaufnehmer integriert.

Hierbei ist erfindungsgemäß für die Elemente des Positionsnehmers bzw. -gebers nicht die Reihenfolge der Anordnung bzw. die Zuordnung zu entweder dem Lagerelement oder dem Bewegungsaufnehmer entscheidend, sondern die integrierte Ausführung dieser Elemente.

In vorteilhafterweise ist das Lagerelement gemäß einer weiteren Ausführungsform als Gelenklagerelement oder Kugellagerelement mit mindestens einer Drehachse ausgebildet. Dadurch wird die Lagerung des Bewegungsaufnehmers bereitgestellt, so dass dieser gegenüber dem Gehäuse gedreht werden kann. Durch ein Kugellagerelement entstehen zusätzliche Drehachsen, die für zusätzliches Spiel sorgen.

Erfindungsgemäß umfasst die Sensoranordnung ein Gehäusemodul zum Aufnehmen des Positionsnehmers oder des Positionsgebers, wobei das Gehäusemodul ausgerichtet an einer Achse, insbesondere Drehachse, des Lagerelements am Gehäuse anbringbar ist. Durch diese Anordnung besitzt die Sensoranordnung einen besonders modularen Aufbau, da das Gehäusemodul mit dem Positionsnehmer oder Positionsgeber eine Einheit bildet, die leicht ausgetauscht werden kann.

Erfindungsgemäß ist das Gehäusemodul so ausgebildet, dass es die mindestens eine Drehachse des Lagerelements so nah am Bewegungsaufnehmer schneidet, dass ein axiales Entfernen des Bewegungsaufnehmers von dem Lagerelement verhindert wird. Damit stellt das Gehäusemodul eine Sicherung gegen das ungewollte Lösen des Bewegungsaufnehmers vom Lagerelement bereit.

In einer weiteren vorteilhaften Ausführungsform umfasst der Positionsnehmer einen 3D- Sensor oder ein um mehrere Raumachsen erfassender Sensor, z. B. ein 3D-Hall-Sensor. Dies hat in Kombination mit einem Lagerelement, welches mehrere Drehachsen zulässt, beispielsweise in Form einer Kugel, den Vorteil, dass auch Drehungswinkel des Bewegungsaufnehmers um eine oder mehrere dieser Drehachsen durch den Positionsnehmer erfasst werden können. In Kombination mit einem Lagerelement, welches im Wesentlichen nur eine Drehachse zulässt, beispielsweise in Form eines Zylinders, können dagegen ungewollte Freiheitsgrade bzw. Drehbewegungen um andere Drehachsen aufgrund von Toleranzen, die sich aus der mechanischen Form des Lagerelements ergeben, erfasst werden. Der 3D- Sensor ermöglicht über einen zeitlichen Verlauf außerdem das Erkennen eines oder mehrerer zusätzlicher Freiheitsgrade, was auf den Verschleiß des Lagerelements bzw. der Lagerung hinweist und diesen erkennbar macht.

In einer zusätzlichen vorteilhaften Ausführungsform ist das Lagerelement in eine Halterung zur Befestigung des Gehäuses integriert.

Es ist bevorzugt, dass das Lagerelement im Bereich der Lagerung im Wesentlichen kugel- oder zylinderförmig ausgebildet ist.

In einer weiteren vorteilhaften Ausführungsform ist der Bewegungsaufnehmer als Welle ausgebildet.

Es ist zweckmäßig, dass die Welle den Rotor eines Elektromotors bildet.

Darunter, dass der Positionsnehmer mit dem Lagerelement oder dem Gehäuse verbunden ist und der Positionsgeber mit dem Bewegungsaufnehmer verbunden ist oder umgekehrt, wird verstanden, dass Positionsnehmer bzw. -geber in integrierter oder differenzierter Bauweise direkt mit der jeweils genannten Komponente verbunden sind.

Vorzugsweise ist dabei das Lagerelement mit dem Gehäuse starr verbunden.

Vorteilhafterweise ist das Lagerelement in eine Halterung zur Befestigung des Gehäuses integriert.

In einer weiteren Ausführungsform bilden das Lagerelement und das Gehäuse eine einteilige Form. Dadurch wird gewährleistet, dass zwischen Lagerelement und Gehäuse keine Abdichtung notwendig ist.

In einer vorteilhaften Ausführungsform ist der Positionsnehmer oder Positionsgeber durch Umspritzen in das Lagerelement, den Bewegungsaufnehmer oder das separate Gehäusemodul integrierbar. Dies ermöglicht eine einfache, kostengünstige Fertigung.

Vorzugsweise umfasst der Positionsnehmer einen magnetoresistiven Sensor, einen Hall-Sensor oder einen induktiven Sensor. Diese Sensorarten sind für die Winkelmessung in einer solchen Sensoranordnung besonders geeignet.

In einer vorteilhaften Ausführungsform umfasst der Positionsgeber einen Encodermagnet.

In einer weiteren vorteilhaften Ausführungsform enthält der Positionsnehmer einen Stützmagnet.

Vorzugsweise umfasst in diesem Fall der Positionsgeber ein Encoderblech. Durch diese Ausführungsform wird die Fertigung und Montage der Sensoranordnung vereinfacht.

In einer vorteilhaften Ausführungsform ist der Bewegungsaufnehmer Teil eines Getriebes, das eine im Wesentlichen lineare Bewegung in eine im Wesentlichen rotatorische Bewegung wandelt.

Es ist zweckmäßig, dass der Bewegungsaufnehmer als Hebelstange ausgebildet ist.

Hierbei ist es vorteilhaft, wenn die Hebelstange drehbar mit einer Koppelstange gekoppelt ist.

Ausführungsbeispiele der Erfindung sind in den Zeichnungen dargestellt und werden im Folgenden näher beschrieben.

Es zeigen:
- Fig. 2: eine schematische Schnittansicht einer Sensoranordnung in integrierter Ausführung,
- Fig. 3: eine schematische Schnittansicht einer erfindungsgemäßen Sensoranordnung in modularer Ausführung,
- Fig. 4: eine Schnittansicht einer Sensoranordnung eines dritten Ausführungsbeispiels,
- Fig. 5: eine Außenansicht einer Sensoranordnung eines vierten Ausführungsbeispiels,

- Fig. 6: eine schematische Schnittansicht einer Sensoranordnung eines fünften Ausführungsbeispiels,

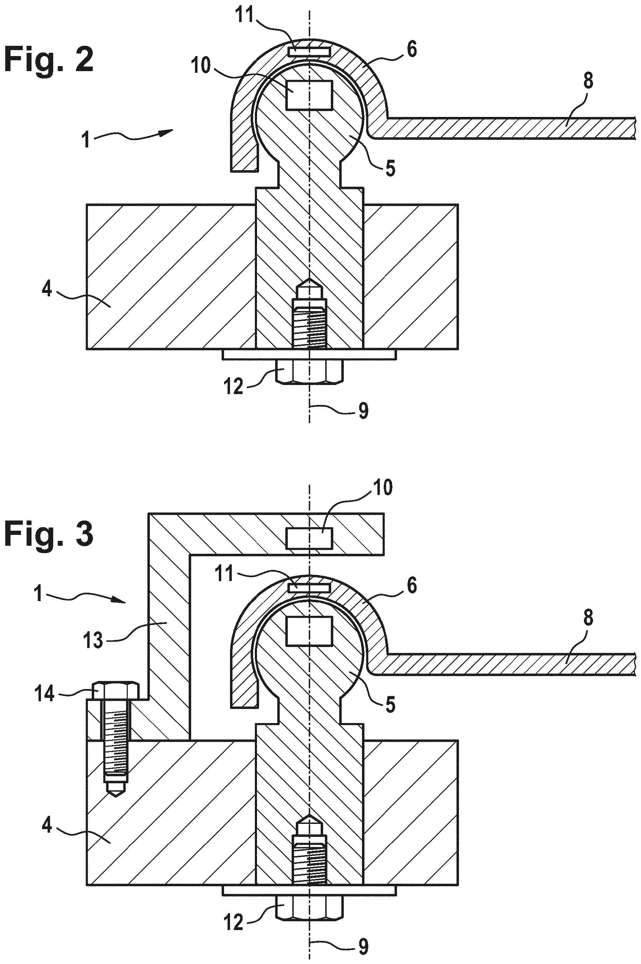

Fig. 2 zeigt schematisch ein erstes Ausführungsbeispiel einer Sensoranordnung 1 in einer Schnittansicht, umfassend einen Bewegungsaufnehmer 8, ein Gehäuse 4, ein gegenüber dem Gehäuse 4 statisches Lagerelement 5 sowie einen Positionsgeber 11 und einen Positionsnehmer 10, wobei diese derart zueinander angeordnet sind, dass die Bewegung des Bewegungsaufnehmers 8 messbar ist.

Das Gehäuse 4 ist über ein Befestigungselement 12 fest mit dem Lagerelement 5 verbunden, so dass dieses mit dem Gehäuse 4 eine unbewegliche Einheit bildet. Eine integrierte oder einteilige Form ohne Befestigungselement 12 von Gehäuse 4 und Lagerelement 5 wäre jedoch ebenfalls denkbar. Außerdem ist das Lagerelement 5 aus dem Gehäuse 4 hervorstehend ausgebildet, so dass der Bereich in dem der Bewegungsaufnehmer 8 gelagert ist, außerhalb des Gehäuses 4 liegt. Das aus dem Gehäuse 4 hervorstehende Ende des Lagerelements 5 ist kugelartig ausgebildet und schränkt die Bewegungsmöglichkeiten des Bewegungaufnehmers 8 so ein, dass dieser in begrenzter Art um Achsen drehbar ist, die den Mittelpunkt der kugelartigen Ausbildung schneiden. Gehäuse 4 und Bewegungsaufnehmer 8 sind dabei so ausgeformt bzw. voneinander beabstandet, dass jede als zulässig definierte Bewegung des Bewegungsaufnehmers 8 ermöglicht wird. Dabei soll in erster Linie ein Drehwinkel um die dargestellte Drehachse 9 erfasst werden, während andere Drehwinkel je nach Ausführungsform des Positionsnehmers 10 entweder gar nicht oder ebenfalls erfasst und zur rechnerischen Bereinigung oder zur Verschleißabschätzung verwendet werden.

Der Bewegungsaufnehmer 8 weist ein hohlkugelartiges Gegenstück 6 entsprechend einer Gelenkpfanne auf. Das so gebildete Kugelgelenk bildet die Lagerung des Bewegungsaufnehmers 8 an dem Gehäuse 4. Der Positionsgeber 11 ist so in den Bewegungsaufnehmer 8 bzw. die Gelenkpfanne integriert, dass dieser Drehwinkel des Bewegungsaufnehmers 8 wiedergeben kann. Der in das Lagerelement 5, bzw. dessen kugelförmige Ausbildung integrierte Positionsnehmer 10 ist so ausgebildet und positioniert, dass er die Drehwinkel erfasst. Das Vertauschen von Positionsgeber 11 und -nehmer 10 wäre ebenso möglich. Dreht sich der Bewegungsaufnehmer 8, beispielsweise in Folge einer Verlagerung einer Koppelstange um die dargestellte Drehachse 9, so dreht sich der Positionsgeber 11 mit. Aufgrund seiner gedrehten Stellung erhält der Positionsnehmer 10 eine veränderte Winkelinformation, beispielsweise durch ein gedrehtes Magnetfeld, die über eine hier nicht dargestellte elektrisch Leitung an eine ebenso nicht dargestellte Auswerteeinheit weitergegeben wird.

In Fig. 3 zeigt eine Schnittansicht einer modularen Form einer erfindungsgemäßen Sensoranordnung 1 gemäß eines zweiten Ausführungsbeispiels. Es umfasst neben einem Bewegungsaufnehmer 8, einem Gehäuse 4, einem Lagerelement 5 sowie einem Positionsgeber 11 und einem Positionsnehmer 10 auch ein Gehäusemodul 13, welches über ein Gehäusemodul-Befestigungselement 14 mit dem Gehäuse 4 verbunden ist und mit diesem eine statische Einheit bildet. Der Positionsnehmer 10 und der Positionsgeber 11 sind derart zueinander angeordnet, dass die Bewegung des Bewegungsaufnehmers 8 messbar ist. Die Merkmale, betreffend die Anordnung das Lagerelements 5 und des Bewegungsaufnehmers 8 sind identisch mit denen der Fig. 2 und werden daher nicht wiederholt.

Anders als in Fig. 2 ist der Positionsnehmer 10 jedoch nicht in das Lagerelement 5, sondern in das Gehäusemodul 13 integriert. Dieses Gehäusemodul 13 ist so ausgebildet, dass der Bewegungsaufnehmer 8 ausreichend Platz für zulässige Drehbewegung hat und ein unerwünschtes Lösen des Bewegungsaufnehmers 8 von dem Lagerelement 5, insbesondere entlang dessen Drehachse 9, verhindert wird. Der Positionsgeber 11 ist in den Bewegungsaufnehmer 8 integriert. Bei dieser Anordnung wird durch die Zuordnung des Positionsnehmers 10 zum Gehäusemodul 13 und des Positionsgebers 11 zum Bewegungsaufnehmer 8 ein modulares Bauteilkonzept verwirklicht. Eine umgekehrte Zuordnung wäre allerdings ebenfalls denkbar. Neben dem Erfassen des Drehwinkels des Bewegungsaufnehmers 8 um die Längsachse des Lagerelements 5 ist durch die Verwendung eines 3D-Sensorelementes, z. B. Hall, als Positionsnehmer 10 auch eine Erfassung von Drehwinkeln um andere Achsen möglich. Mit Hilfe einer nicht dargestellten Auswerteeinheit kann auf diese Weise ein Rückschluss auf Verschleiß der Lagerung gezogen oder das Ergebnis einer bestimmten Winkelerfassung bereinigt werden.

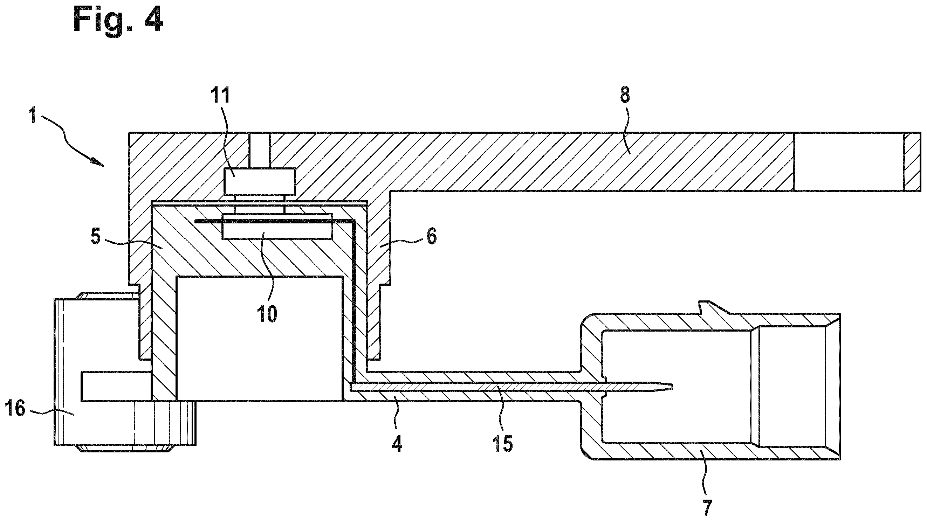

Fig. 4 zeigt in einer weiteren Schnittansicht eine Sensoranordnung 1 gemäß eines dritten Ausführungsbeispiels. Auf eine wiederholte Beschreibung identischer Merkmale der vorausgehenden Figuren wird verzichtet.

Das Lagerelement 5 ist hier zylinderförmig ausgeführt und enthält den integrierten Positionsnehmer 10, der über eine elektrische Leitung 15 mit einer nicht dargestellten Auswerteelektronik in einem Behälterbereich 7 des Gehäuses 4 verbunden ist. Es ist, anders als in den Ausführungsformen von Fig. 3 und Fig. 4 gezeigt, nicht über ein Befestigungselement, sondern in integrierter Form mit dem Gehäuse 4 verbunden. Das Lagerelement 5 bildet zusammen mit dem entsprechend ausgeformten Gegenstück 6 des Bewegungsaufnehmers 8 einen Teil eines Gelenklagers, das den Bewegungsaufnehmer 8 im Wesentlichen auf einen Freiheitsgrad, die Drehung um die Längsachse des zylinderförmigen Lagerelements 5, beschränkt. Der Positionsgeber 11 ist an dieser Drehachse ausgerichtet und in den Bewegungsaufnehmer 8 integriert.

Das Gehäuse enthält an einem Ende eine Befestigungsausformung 16, die der Befestigung des Gehäuses 4 an einem Teil der Fahrzeugkarosserie mittels eines geeigneten Befestigungselementes dient. An das integriert ausgebildete Lagerelement 5 schließt sich ein schmaler Bereich an, der die elektrische Leitung 15 des Positionsnehmers 10 zu dem Behälterbereich 7 mit der nicht dargestellten Auswerteelektronik führt.

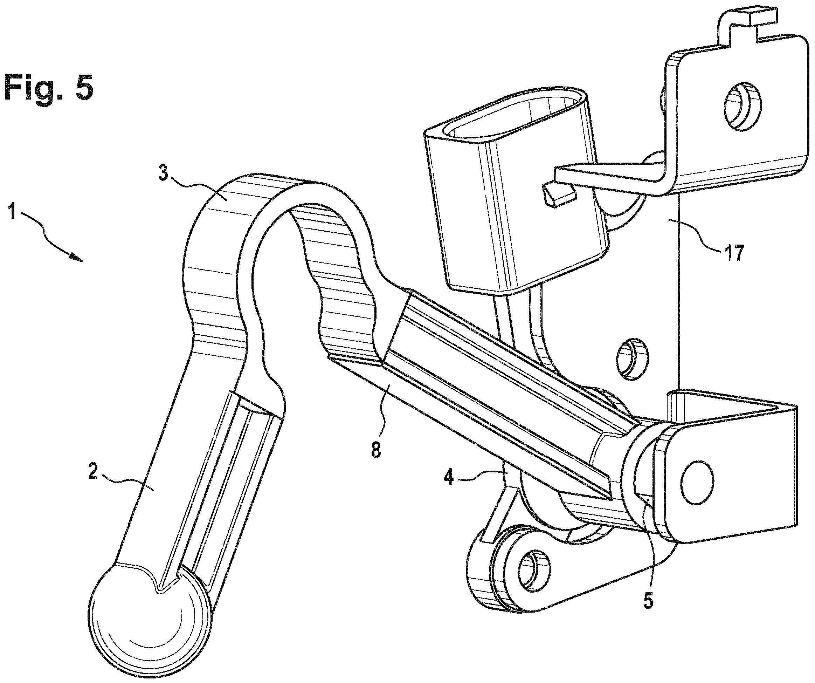

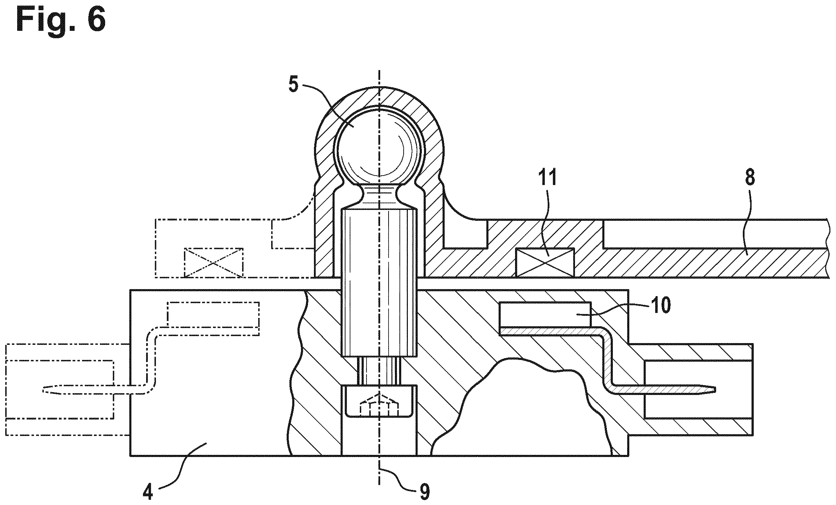

Fig. 5 zeigt in einer weiteren Ausführungsform eine Sensoranordnung 1 in der integrierten Form gemäß eines vierten Ausführungsbeispiels. Auf eine wiederholte Beschreibung identischer Merkmale der vorausgehenden Figuren wird auch hier verzichtet. Der Bewegungsaufnehmer 8 ist mit einer verlagerbaren Koppelstange 2 über ein elastisch verformbares Gelenkteil aus Kunststoff verbunden um Verlagerungen einer nicht dargestellten Fahrzeugkomponente zu erfassen. Das elastische Gelenkteil bildet das Koppelgelenk 3 und ist in der Lage, unter Einsparung eines mehrteiligen Gelenks wie in Fig 1a dargestellt, eine Verlagerung der Koppelstange 2 in eine Drehung des Bewegungsaufnehmers 8 zu überführen. Das Lagerelement 5 ist bei dieser Ausführungsform mit einer Halterung 17 zur Befestigung des Gehäuses 4 an einem Fahrzeugteil verbunden. Der Positionsnehmer und der Positionsgeber sind in dieser Darstellung verdeckt. Sie sind in das Gehäuse 4 bzw. den Bewegungsaufnehmer 8 integriert. Die in Fig. 6 gezeigte Schnittansicht einer integrierten Form einer Sensoranordnung gemäß eines fünften Ausführungsbeispiels umfasst neben bereits zuvor beschriebenen Komponenten, wie dem Bewegungsaufnehmer 8, dem Lagerelement 5 und dem Gehäuse 4, auf deren wiederholte Beschreibung verzichtet wird, je einen zu der Drehachse des Bewegungsaufnehmers 8 radial beabstandeten Positionsnehmer 10 und Positionsgeber 11. Diese sind ringförmig ausgebildet, jedoch wäre auch eine teilringförmige oder mehrteilige Ausführung des Positionsnehmers 10 und/oder Positionsgebers 11 denkbar. Alternativ oder zusätzlich ist statt der gezeigten Anordnung von Positionsnehmer 10 und -geber 11 parallel zur Drehachse 9 auch eine Anordnung radial zur Drehachse 9 möglich.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 1.: Sensoranordnung
- 2.: Koppelstange
- 3.: Koppelgelenk
- 4.: Gehäuse
- 5.: Lagerelement
- 6.: Gegenstück
- 7.: Behälterbereich
- 8.: Bewegungsaufnehmer
- 9.: Drehachse
- 10.: Positionsnehmer
- 11.: Positionsgeber
- 12.: Befestigungselement
- 13.: Gehäusemodul
- 14.: Gehäusemodul-Befestigungselement
- 15.: elektrische Leitung
- 16.: Befestigungsausformung
- 17.: Halterung

## Patentansprüche

1. Sensoranordnung (1) aufweisend
- ein Gehäuse (4),
- einen Bewegungsaufnehmer (8), wobei der Bewegungsaufnehmer (8) an einem mit dem Gehäuse (4) verbundenen Lagerelement (5) gelagert ist,
- einen Positionsnehmer (10), und
- einen Positionsgeber(11),
wobei der Positionsnehmer (10) und der Positionsgeber (11) derart zueinander angeordnet sind, dass die Bewegung des Bewegungsaufnehmers (8) messbar ist,
wobei
das Lagerelement (5) aus dem Gehäuse (4) hervorstehend ausgebildet ist,
- ferner aufweisend ein Gehäusemodul (13) zum Aufnehmen des Positionsnehmers (10) oder des Positionsgebers (11), wobei das Gehäusemodul (13) ausgerichtet an einer Achse, insbesondere Drehachse (9), des Lagerelements (5) am Gehäuse (4) anbringbar ist, **dadurch gekennzeichnet, dass** das Gehäusemodul (13) so ausgebildet ist, dass es die mindestens eine Drehachse des Lagerelements (5) so nah am Bewegungsaufnehmer (8) schneidet, dass ein axiales Entfernen des Bewegungsaufnehmers (8) von dem Lagerelement (5) verhindert wird.

2. Sensoranordnung (1) nach Anspruch 1, wobei das Lagerelement (5) mit dem Gehäuse (4) starr verbunden ist.

3. Sensoranordnung (1) nach einem der vorhergehenden Ansprüche, wobei der Positionsnehmer (10) oder der Positionsgeber (11) in das Lagerelement (5) oder das Gehäuse (4) integriert ist.

4. Sensoranordnung (1) nach einem der vorhergehenden Ansprüche, wobei der Positionsnehmer (10) oder der Positionsgeber (11) in den Bewegungsaufnehmer (8) integriert ist.

5. Sensoranordnung (1) nach einem der vorhergehenden Ansprüche, wobei das Lagerelement (5) als Gelenklagerelement oder Kugellagerelement mit mindestens einer Drehachse (9) ausgebildet ist.

6. Sensoranordnung (1) nach einem der vorhergehenden Ansprüche, wobei der Positionsnehmer (10) einen 3D -Sensor umfasst.

7. Sensoranordnung (1) nach einem der vorhergehenden Ansprüche, wobei das Lagerelement (5) in eine Halterung (17) zur Befestigung des Gehäuses (4) integriert ist.

8. Sensoranordnung (1) nach einem der vorhergehenden Ansprüche, wobei das Lagerelement (5) im Bereich der Lagerung im Wesentlichen kugel- oder zylinderförmig ausgebildet ist.

9. Sensoranordnung (1) nach einem der vorhergehenden Ansprüche, wobei der Bewegungsaufnehmer (8) als Welle ausgebildet ist.

## Claims

1. Sensor arrangement (1) having
- a housing (4),
- a movement sensor (8), wherein the movement sensor (8) is mounted on a bearing element (5) that is connected to the housing (4),
- a position sensor (10), and
- a position transducer (11),
wherein the position sensor (10) and the position transducer (11) are mutually disposed in such a manner that the movement of the movement sensor (8) is measurable,
wherein
the bearing element (5) is configured so as to project from the housing (4),
- furthermore having a housing module (13) for receiving the position sensor (10) or the position transducer (11), wherein the housing module (13) is attachable to the housing (4) so as to be aligned on an axis, in particular a rotation axis (9), of the bearing element (5), **characterized in that** the housing module (13) is configured such that said housing module (13) intersects the at least one rotation axis of the bearing element (5) so close to the movement sensor (8) that an axial removal of the movement sensor (8) from the bearing element (5) is prevented.

2. Sensor arrangement (1) according to Claim 1, wherein the bearing element (5) is rigidly connected to the housing (4).

3. Sensor arrangement (1) according to one of the preceding claims, wherein the position sensor (10) or the position transducer (11) is integrated in the bearing element (5) or in the housing (4).

4. Sensor arrangement (1) according to one of the preceding claims, wherein the position sensor (10) or the position transducer (11) is integrated in the movement sensor (8).

5. Sensor arrangement (1) according to one of the preceding claims, wherein the bearing element (5) is configured as an articulated bearing element or a spherical bearing element having at least one rotation axis (9).

6. Sensor arrangement (1) according to one of the preceding claims, wherein the position sensor (10) comprises a 3D sensor.

7. Sensor arrangement (1) according to one of the preceding claims, wherein the bearing element (5) is integrated in a holder (17) for fastening the housing (4) .

8. Sensor arrangement (1) according to one of the preceding claims, wherein the bearing element (5) in the region of the mounting is configured so as to be substantially spherical or cylindrical.

9. Sensor arrangement (1) according to one of the preceding claims, wherein the movement sensor (8) is configured as a shaft.

## Revendications

1. Dispositif de détection (1) comprenant
- un boîtier (4),
- un capteur de mouvement (8), le capteur de mouvement (8) étant monté sur un élément de palier (5) relié au boîtier (4),
- un capteur de position (10), et
- un transmetteur de position (11),
le capteur de position (10) et le transmetteur de position (11) étant disposés l'un par rapport à l'autre de manière à pouvoir mesurer le mouvement du capteur de mouvement (8),
l'élément de palier (5) étant formé en saillie par rapport au boîtier (4),
- le dispositif de détection comprenant en outre un module de boîtier (13) destiné à recevoir le capteur de position (10) ou le transmetteur de position (11), le module de boîtier (13) pouvant être monté sur le boîtier (4) en étant orienté sur un axe, en particulier un axe de rotation (9), de l'élément de palier (5), **caractérisé en ce que** le module de boîtier (13) est conçu de façon à couper l'au moins un axe de rotation de l'élément de support (5) près du capteur de position (8) de façon à empêcher un éloignement axial du capteur de mouvement (8) de l'élément de support (5).

2. Dispositif de détection (1) selon la revendication 1, l'élément de palier (5) étant relié de manière rigide au boîtier (4).

3. Dispositif de détection (1) selon l'une des revendications précédentes, le capteur de position (10) ou le transmetteur de position (11) étant intégré dans l'élément de palier (5) ou dans le boîtier (4).

4. Dispositif de détection (1) selon l'une des revendications précédentes, le capteur de position (10) ou le transmetteur de position (11) étant intégré dans le capteur de mouvement (8).

5. Dispositif de détection (1) selon l'une des revendications précédentes, l'élément de palier (5) étant conçu sous la forme d'un élément de palier d'articulation commun ou d'un élément de palier à billes comprenant au moins un axe de rotation (9).

6. Dispositif de détection (1) selon l'une des revendications précédentes, le capteur de position (10) comprenant un capteur 3D.

7. Dispositif de détection (1) selon l'une des revendications précédentes, l'élément de palier (5) étant intégré dans un support (17) destiné à la fixation du boîtier (4).

8. Dispositif de détection (1) selon l'une des revendications précédentes, l'élément de palier (5) étant conçu dans la région du palier de manière sensiblement sphérique ou cylindrique.

9. Dispositif de détection (1) selon l'une des revendications précédentes, le capteur de mouvement (8) étant conçu comme un arbre.
